# EUROPÄISCHE PATENTSCHRIFT

(11) **EP 1 356 125 B1**
(45) Veröffentlichungstag und Bekanntmachung des Hinweises auf die Patenterteilung: **16.02.2005**
(21) Anmeldenummer: 01994599.7
(22) Anmeldetag: 05.12.2001
(51) Int. Cl.: C21D 5/00, C23C 6/00, C23F 3/00

(54) **VERFAHREN ZUR VORBEHANDLUNG EINES RINGTRÄGERS VOR DEM ALFINIEREN**
METHOD FOR PRE-TREATING A RING SUPPORT PRIOR TO THE ALFIN PROCESS
PROCEDE DE TRAITEMENT PREALABLE D'UN PORTE-SEGMENT AVANT L'APPLICATION DU PROCEDE ALFIN

(30) Priorität: 30.01.2001 DE 10103896
(43) Veröffentlichungstag der Anmeldung: 29.10.2003
(73) Patentinhaber: Mahle GmbH, 70376 Stuttgart (DE)
(72) Erfinder: BISCHOFBERGER, Ulrich, 73732 Esslingen (DE)
(74) Vertreter: Pohle, Reinhard
(86) Internationale Anmeldenummer: PCT/DE2001/004614
(87) Internationale Veröffentlichungsnummer: WO 2002/061153

(56) Entgegenhaltungen:
- DE-C1- 4 238 525
- GB-A- 751 523
- US-A- 5 487 922
- US-A- 5 960 762

## Beschreibung

Die Erfindung betrifft ein Verfahren zur Vorbehandlung eines Ringträgers für Aluminiumkolben vor dem Alfinieren.

Bei Aluminiumkolben von Dieselmotoren wird die Nut für den ersten Kolbenring im Regelfall durch eingegossene Bewehrungen aus austenitischem Gußeisen, die als Ringträger bezeichnet werden, gegen Verschleiß geschützt.

Wesentlich,beim Eingießen ist eine gute Verbindung zwischen Ringträger und Grundwerkstoff des Kolbens. Diese Verbindung wird vor der Herstellung des Kolbens durch eine sogenannte ALFIN-Schicht erzeugt, eine Schicht aus Eisenaluminiden, die durch Tauchen des Ringträgers in einer AlSi-Schmelze entsteht. Damit die Schicht sich optimal ausbilden kann und später eine gute Bindung zwischen Ringträger und Aluminiumwerkstoff vorliegt muß die Oberfläche des Eisenwerkstoffs oxidfrei sein.

Bekannt ist es, den Ringträger vor dem Tauchen zu strahlen, um Oxide zu entfernen. Allerdings führt dieses Verfahren nicht immer zu befriedigenden Ergebnissen.

Die Erfindung beschäftigt sich daher mit dem Problem, vor dem Alfinieren eine möglichst oxidfreie Oberfläche des Ringträgers herzustellen.

Dieses Problem wird gelöst durch ein Verfahren nach Anspruch 1. Vorteilhafte Weiterbildungen sind Gegenstand der Unteransprüche.

Vergleichbare Wärmebehandlungen unter Wasserstoffatmosphäre sind bekannt für kaltumgeformte austenitische Stähle, z.B. für Wellschläuche.

Durch das Glühen im Vakuum oder in Wasserstoffatmosphäre entsteht eine metallisch blanke Oberfläche. Auf das bisher notwendige Strahlen kann daher verzichtet werden.

Die Glühtemperatur liegt vorzugsweise zwischen 1000°C und 1130°C. Dann genügt ein Zeitraum von 5 - 20 Minuten auf Temperatur. Bei niedrigeren Temperaturen im Bereich von 900°C bis 950°C muß der Zeitraum auf Temperatur auf bis zu 1 Stunde ausgedehnt werden.

Die Abkühlgeschwindigkeit nach dem Glühen soll mindestens 2 K/min betragen und liegt vorzugsweise über 5 K/min. Hierdurch wird ein Zerfall der üblicherweise austenitischen Gefügestruktur des Ringträgers vermieden.

Das Glühen im Vakuum soll bei möglichst niedrigem Druck stattfinden, vorzugsweise bei 10⁻³ bis 10⁻⁶ mbar.

Selbstverständlich ist das Verfahren außer für ungekühlte Ringträger auch für gekühlte Ringträger anwendbar, d.h. für Ringträger, bei denen radial innerhalb des Ringträgerrükkens durch einen angeschweißten Blechkühlkanal eine direkte Kühlung dieses Bereichs durch Motoröl erfolgt.

## Patentansprüche

1. Verfahren zur Vorbehandlung von Ringträgern von Aluminiumkolben vor dem Alfinieren,
**dadurch gekennzeichnet,**
**dass** die Ringträger im Vakuum bei einem Druck von 10⁻³ bis 10⁻⁶ mbar oder in wasserstoffhaltiger reduzierender Atmosphäre bei Temperaturen zwischen 900°C und 1130°C geglüht und danach auf Raumtemperatur mit einer Geschwindigkeit von mindestens 2 K/min, vorzugsweise >5 K/min, abgekühlt werden.

2. Verfahren nach Anspruch 1, **dadurch gekennzeichnet, dass** das Glühen über einen Zeitraum von 5 bis 10 Minuten erfolgt.

3. Verfahren nach Anspruch 1 und 2, **dadurch gekennzeichnet, dass** Ringträger aus austenitischem Gusseisen mit angeschweißtem Blechkühlkanal aus austenitischem Stahl verwendet werden.

## Claims

1. A method for the preliminary treatment of ring supports of aluminium pistons prior to the alfin process,
**characterised in that** the ring supports are annealed in a vacuum at a pressure of 10⁻³ to 10⁻⁶ mbar or in a hydrogenous reducing atmosphere at temperatures of between 900°C and 1130°C and afterwards are cooled to ambient temperature at a speed of at least 2 K/min, preferably > 5 K/min.

2. A method according to Claim 1,
**characterised in that** annealing takes place over a period of 5 to 10 minutes.

3. A method according to Claim 1 and 2,
**characterised in that** ring supports made from austenitic cast iron having a welded-on sheet metal cooling channel made from austenitic steel are used.

## Revendications

1. Procédé de traitement préalable de porte-segments de pistons en aluminium avant l'application du procédé Al-Fin, **caractérisé en ce que** les porte-segments sont recuits sous vide sous une pression de 10⁻³ à 10⁻⁶ mbar ou sous atmosphère réductrice contenant de l'hydrogène à des températures comprises entre 900°C et 1130°C, puis refroidis à température ambiante à une vitesse d'au moins 2 K/min, de préférence > 5 K/min.

2. Procédé suivant la revendication 1, **caractérisé en ce que** le recuit est effectué sur une période de 5 à 10 minutes.

3. Procédé suivant les revendications 1 et 2, **caractérisé en ce qu'**on utilise des porte-segments en fonte austénitique sur lesquels est soudé un conduit de refroidissement en tôle en acier austénitique.
